# EUROPÄISCHE PATENTANMELDUNG

(11) **EP 2 933 233 A1**
(43) Veröffentlichungstag der Anmeldung: **21.10.2015**
(21) Anmeldenummer: 15157163.5
(22) Anmeldetag: 02.03.2015
(51) Int. Cl.: C02F 1/461

(54) **Verfahren zur Rückgewinnung von Phosphat aus einer Flüssigphase**

(30) Priorität: 16.04.2014 DE 102014105471
(71) Anmelder: AVA-Co2 Schweiz AG, 6304 Zug (CH)
(72) Erfinder: Vyskocil, Jan, 6304 Zug (CH); Kusche, Stepan, 76187 Karlsruhe (DE); Badoux, François, 6343 Rotkreuz (CH)
(74) Vertreter: Christ, Niko

(57) **Zusammenfassung**

Bekannte Verfahren zur Phosphor-Rückgewinnung aus Flüssigphasen gehen davon aus, dass Ammoniak oder Nitrat, sowie Phosphat, beispielsweise als Orthophosphat, in der Flüssigphase vorhanden sind. Als Flüssigphase kann hierbei Abwasser verwendet werden, das in Kläranlagen von Nitrat- und Phosphatbelastungen gereinigt werden soll. In elektrochemischen Verfahren wird eine Magnesiumelektrode als Opferanode eingesetzt und Ammonium und Phosphat zusammen mit dem Magnesium zu Struvit verbunden, das wiederum als Dünger in der Landwirtschaft nutzbringend eingesetzt werden kann.

In einer alternativen Vorgehensweise geht die Erfindung davon aus, dass zunächst lediglich Phosphate aus einer Flüssigphase entnommen werden sollen, die aus der Filterung von Produkten der hydrothermalen Karbonisierung entsteht. Hierzu wird eine Magnesiumelektrode als Kathode eingesetzt, so dass das entstehende Magnesiumphosphat nicht in Lösung geht und erst ausgefällt werden muss, sondern nach Durchreaktion direkt mit der Kathode aus der Elektrolysezelle entnommen werden kann.

## Beschreibung

Die vorliegende Erfindung betrifft ein Verfahren zur Rückgewinnung von Phosphat aus einer Flüssigphase, wobei eine Magnesium-Elektrode und eine weitere Elektrode unter Zwischenschaltung der Flüssigphase als Elektrolytlösung zu einer ersten Elektrolysezelle zusammengeschaltet sind.

Ein solches Verfahren ist bereits aus der US 2014/0021057 A1 vorbekannt. Gegenstand dieser Schrift ist ein Verfahren zur Behandlung von Abwässern, in dessen Rahmen Phosphate aus dem Abwasser entzogen werden sollen, um diese für den weiteren Gebrauch zu reinigen.

Aufgrund der Düngung mit Phosphaten und Stickstoffverbindungen gelangen diese Stoffe in die Abwässer, welche dann mit dem Regen in die Kanalisation gespült werden. Von dort werden sie den Kläranlagen zugeführt, in denen eine Aufbereitung des Wassers für die weitere Verwendung vorgenommen wird. Das genannte Verfahren sieht hierfür vor, mithilfe einer Elektrolysezelle in einem elektrolytischen Verfahren Orthophosphate und Ammonium zu binden, indem über eine Opferanode Magnesium zugeführt wird. Im Rahmen des Elektrolyseverfahrens entsteht hierbei Magnesiumammoniumphosphat, das so genannte Struvit, welches als Düngemittel eingesetzt werden kann. Dieses kann aus der Flüssigphase ausgefällt und dieser entnommen werden.

Industrielle Abwässer, hier im Fokus insbesondere Abwässer aus der hydrothermalen Karbonisierung, enthalten nicht notwendigerweise Ammonium, so dass für eine Durchführung des oben beschriebenen Verfahrens eine Hinzufügung von Ammonium erforderlich wäre, was kostenintensiv und ineffektiv wäre. Alternativ zu dem oben genannten Verfahren wird also nach einer Möglichkeit gesucht, aus einer Flüssigphase lediglich Phosphate, beispielsweise Orthophosphate, zu entnehmen, ohne dass hierfür eine Zugabe kostenintensiver und gleichzeitig umweltschädlicher Substanzen erforderlich wäre. Zudem stellt es einen zusätzlichen Arbeitsschritt dar, das gebundene Phosphat nochmals aus der Elektrolytlösung auszufiltern.

Vor diesem Hintergrund liegt der vorliegenden Erfindung die Aufgabe zu Grunde, ein vereinfachtes Verfahren zur Rückgewinnung von Phosphat aus einer Flüssigphase vorzuschlagen, welches ohne eine Zugabe von Ammonium auskommt.

Gelöst wird diese Aufgabe durch ein Verfahren zur Rückgewinnung von Phosphat aus einer Flüssigphase gemäß den Merkmalen des Anspruchs 1. Weitere, sinnvolle Ausgestaltungen eines derartigen Verfahrens können den Unteransprüchen entnommen werden.

Erfindungsgemäß ist vorgesehen, ebenfalls eine Magnesium-Elektrode, wie bereits im Stand der Technik vorgesehen, einzusetzen. Es wird diese Magnesium-Elektrode jedoch nicht als Opferanode eingesetzt, sondern vielmehr als Kathode, an welcher sich das in der Flüssigphase enthaltene Phosphat bei Anlegen einer Spannung anlagert. Benötigt wird hierfür auf der gegenüberliegenden Seite eine andere, vorzugsweise inerte Anode, welche beispielsweise aus Graphit bestehen kann. Diese kann vorteilhafterweise ergänzend Einschlüsse, etwa aus Erdalkalimetallen wie Lithium oder Kalium enthalten.

Die Anode kann so gewählt sein, dass sie als Opferanode funktioniert, also im Rahmen der Elektrolyse in Lösung geht, während gleichzeitig das aus der Flüssigphase austretende Phosphat sich an der Magnesiumkathode anlagert. Es entsteht hierdurch Magnesiumphosphat, welches seinerseits bereits als Dünger geeignet ist oder auch weiterverarbeitet werden kann. Vorteil dieses Vorgehens ist insbesondere, dass die Magnesiumkathode ohne Weiteres aus der Elektrolytlösung entnommen werden kann, ohne dass hierfür ein spezieller Filtervorgang stattfinden müsste. Durch eine anschließende Zerkleinerung der Magnesiumkathode kann das Magnesiumphosphat unproblematisch gewonnen werden. Soweit eine inerte Anode eingesetzt wird, kann eine zusätzliche Opferelektrode eingesetzt werden.

Die Flüssigphase, welche als Elektrolytlösung dient, wird hierbei vorteilhafterweise dadurch gewonnen, dass das Produkt einer hydrothermalen Karbonisierung mit einer Säure gemischt wird, diese Mischung filtriert und die daraus entstehende Flüssigphase entnommen wird. Der Ablauf sieht hierbei vor, dass insbesondere zunächst der aus dem hydrothermalen Karbonisierungsprozess entstehende Slurry einer Presse zugeführt wird, so dass das in dem Slurry enthaltene Prozesswasser zunächst grob entfernt werden kann. Der durch die Pressung vorgetrocknete Filterkuchen wird dann mit einer Säure, beispielsweise mit Schwefelsäure, gemischt, so dass sich die Phosphate aus dem Filterkuchen in der Schwefelsäure lösen. Hierbei ist es besonders vorteilhaft, wenn sich bei dieser Mischung ein pH-Wert im Bereich von 1 einstellt, wobei der exakte pH-Bereich etwa von 0,5 - 1,5 reichen sollte.

Bei einer derartigen Filtration wird bereits ein sehr hoher Anteil der Phosphate isoliert, es kann davon ausgegangen werden, dass bereits etwa 90 % der Phosphate aus dem Filterkuchen durch eine derartige Filtrierung ausgesondert werden können. Durch eine wiederholte Filtrierung unter erneuter Zugabe von einem weiteren Lösungsmittel, beispielsweise von destilliertem Wasser, kann der ausgesonderte Phosphatanteil nochmals erhöht werden. Hierzu wird der Filterkuchen, welcher wiederum von der Schwefelsäure getrennt wurde, mit destilliertem Wasser versetzt und durchmischt und seinerseits wieder in einem Filterbecken abgefiltert, so dass die sich hierbei einstellende Flüssigphase wiederum zusätzliche Anteile des Phosphats ausschwemmt.

Die so entstehenden Flüssigphasen auf der Basis des destillierten Wassers oder auch der Schwefelsäure können entweder zusammengeführt oder separat voneinander als Flüssigphase in der Elektrolysezelle eingesetzt werden.

Neben einer Entnahme von Phosphaten kann zusätzlich auch eine weitere Entnahme von Bestandteilen vorgesehen sein, welche über weitere Elektrolysezellen stattfinden kann. So ist es beispielsweise möglich, durch eine geeignete Wahl von Elektroden auch Material wie Schwermetalle auszusondern, welche die Flüssigphase belasten. Dies kann insbesondere durch weitere Elektrolysezellen erfolgen, welche nacheinander mit der Flüssigphase beaufschlagt werden, die Elektrolysezellen können hierbei jedoch auch miteinander überschneidend gebildet werden, indem eine Kaskade aufgebaut wird, deren einzelne Zellen beispielsweise durch Membranen voneinander getrennt sind. Auch die Ausbildung einzelner pH-Bereiche innerhalb der Elektrolytlösung dient zur Trennung dieser Zellen. Ebenfalls ist es jedoch möglich, die Flüssigphase von einer in die andere Elektrolysezelle zu verbringen und nacheinander auf diese Weise mehrere Zellen durchlaufen zu lassen.

Die vorstehend beschriebene Erfindung wird im Folgenden anhand eines Ausführungsbeispiels näher erläutert. Es zeigen
- Figur 1: ein Verfahrensteilabschnitt zur Herstellung der Flüssigphase, welcher der Elektrolyse zu Grunde liegt in einer schematischen Darstellung, sowie
- Figur 2: eine schematische Darstellung einer Elektrolysezelle gemäß der vorliegenden Erfindung in einer schematischen seitlichen Darstellung.

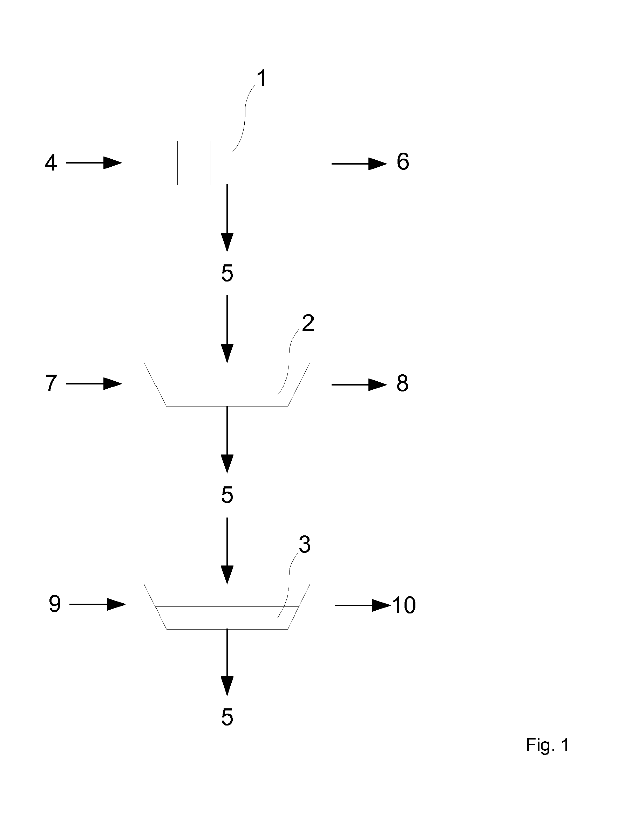

Figur 1 zeigt den Herstellungsvorgang der Flüssigphase, wobei zunächst eine Kammerfilterpresse 1 eingesetzt wird, um den ihr zugeführten Slurry 4 von dem darin enthaltenen Prozesswasser 6 zu befreien. Durch eine Pressung des Slurry 4 wird mithilfe der Kammerfilterpresse 1 das Prozesswasser 6 entfernt und wieder dem hydrothermalen Karbonisierungsprozess zugeführt. In der Kammerfilterpresse 1 zurück bleibt der bereits weitgehend getrocknete Filterkuchen 5, welcher in einem nächsten Schritt zusammen mit Schwefelsäure 7 in ein erstes Filterbecken 2 verbracht wird. Infolge der Durchmischung bei einem pH-Wert im Bereich von 1 löst die Schwefelsäure 7 aus dem Filterkuchen 5 einen großen Anteil der darin enthaltenen Phosphate und kann als erstes Filtrat 8 durch festflüssig-Trennung aus dem ersten Filterbecken 2 entnommen werden. In einem weiteren, letztlich iterierbaren Schritt wird dem nun entstandenen Filterkuchen 5 destilliertes Wasser 9 zugeführt und diese Mischung in einem zweiten Filterbecken 3 erneut durchmischt. Dies löst weitere Phosphate aus dem Filterkuchen 5 heraus, welcher erneut in dem zweiten Filterbecken 3 filtriert wird, so dass ein zweites Filtrat 10 entnommen und der verbleibende, weitgehend von Phosphaten befreite Filterkuchen 5 als Produkt weiterverarbeitet werden kann.

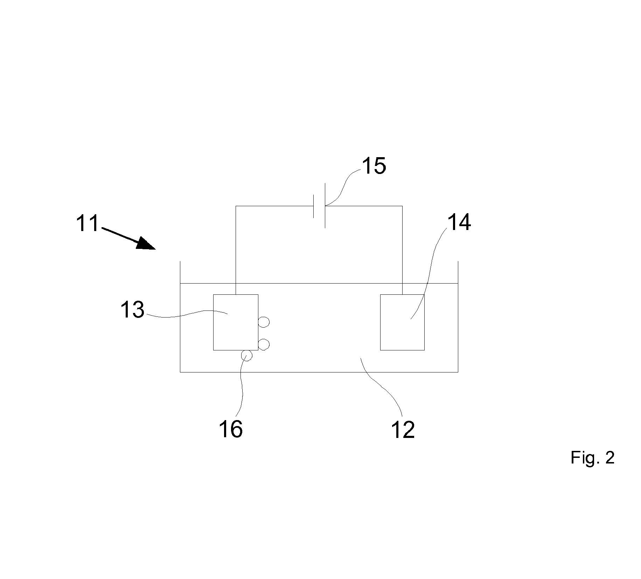

Figur 2 zeigt schließlich eine Elektrolysezelle 11, welche eine Kathode 13 und eine Opferanode 14 aufweist. Die Kathode 13 ist hierbei aus Magnesium hergestellt. Durch ein Anlegen von Spannung mithilfe einer Spannungsquelle 15 zwischen den beiden Elektroden 13, 14 geht das Material der Opferanode 14 in Lösung in die Flüssigphase 12, während die in der Flüssigphase 12 gelösten Phosphate an der Kathode 13 eine Phosphatanlage 16 bilden. Der Flüssigphase 12, welche aus dem in Figur 1 beschriebenen Prozess aus einer Durchmischung der Filtrate 8 und 10 entsteht, werden damit die in ihr gelösten Phosphate entzogen, welche auf diesem Wege zurückgewonnen werden können. Das an der Kathode 13 entstehende Magnesiumphosphat kann weiterverarbeitet werden oder direkt in der vorliegenden Form als Magnesiumphosphat z.B. als Dünger eingesetzt werden.

Vorstehend beschrieben ist somit ein Verfahren zur Rückgewinnung von Phosphat aus einer Flüssigphase, bei welchem es vorgesehen ist, im Rahmen einer Elektrolyse eine Anlagerung der gelösten Phosphate an der Kathode zu bewirken, so dass die gebundenen Phosphate direkt aus der Flüssigphase entnehmbar sind. Auf eine Zugabe weiterer Chemikalien kann kostenschonend und gleichzeitig umweltschonend verzichtet werden.

### BEZUGSZEICHENLISTE

- 1: Kammerfilterpresse
- 2: erstes Filterbecken
- 3: zweites Filterbecken
- 4: Slurry
- 5: Filterkuchen
- 6: Prozesswasser
- 7: Schwefelsäure
- 8: erstes Filtrat
- 9: Destilliertes Wasser
- 10: zweites Filtrat
- 11: Elektrolysezelle
- 12: Flüssigphase
- 13: Kathode
- 14: Opferanode
- 15: Spannungsquelle
- 16: Phosphatanlagerung

## Patentansprüche

1. Verfahren zur Rückgewinnung von Phosphat aus einer Flüssigphase (12), wobei eine Magnesium-Elektrode und eine weitere Elektrode unter Zwischenschaltung der Flüssigphase (12) als Elektrolytlösung zu einer ersten Elektrolysezelle (11) zusammengeschaltet sind,
**dadurch gekennzeichnet, dass** die Magnesium-Elektrode in der ersten Elektrolysezelle (11) als Kathode (13) eingesetzt wird, an welcher sich im Rahmen einer Elektrolyse in der Flüssigphase (12) enthaltenes Phosphat anlagert.

2. Verfahren gemäß Anspruch 1, **dadurch gekennzeichnet, dass** als Anode (14) eine inerte Elektrode eingesetzt wird.

3. Verfahren gemäß Anspruch 1 oder 2, **dadurch gekennzeichnet, dass** als Anode (14) eine Graphit-Elektrode eingesetzt wird.

4. Verfahren gemäß Anspruch 3, **dadurch gekennzeichnet, dass** in der Graphit-Elektrode Einschlüsse aus wenigstens einem Erdalkalimetall eingearbeitet sind.

5. Verfahren gemäß einem der vorhergehenden Ansprüche, **dadurch gekennzeichnet, dass** der ersten Elektrolysezelle eine dritte Elektrode als Opferelektrode zugeordnet ist.

6. Verfahren gemäß einem der vorhergehenden Ansprüche, **dadurch gekennzeichnet, dass** die Flüssigphase (12) dadurch hergestellt wird, dass ein Produkt aus einem hydrothermalen Karbonisierungsprozess mit einer Säure gemischt, filtriert und das Filtrat als Flüssigphase (12) entnommen wird.

7. Verfahren gemäß Anspruch 6, **dadurch gekennzeichnet, dass** es sich bei der Säure um Schwefelsäure handelt.

8. Verfahren gemäß einem der Ansprüche 6 oder 7, **dadurch gekennzeichnet, dass** mithilfe der Säure in der Mischung aus der Säure und dem Produkt aus dem hydrothermalen Karbonisierungsprozess ein pH-Wert im Bereich von 1 eingestellt wird.

9. Verfahren gemäß einem der Ansprüche 6 bis 8, **dadurch gekennzeichnet, dass** die Filtration in wenigstens einem weiteren Filtrationsschritt unter Zugabe von weiterem Lösungsmittel zu der bereits filtrierten Mischung wiederholt wird.

10. Verfahren gemäß Anspruch 9, **dadurch gekennzeichnet, dass** als weiteres Lösungsmittel destilliertes Wasser (9) eingesetzt wird.

11. Verfahren gemäß einem der Ansprüche 9 oder 10, **dadurch gekennzeichnet, dass** das Filtrat aus den weiteren Filtrationsschritten mit dem Filtrat aus dem ersten Filtrationsschritt zu der Flüssigphase (12) zusammengeführt wird.

12. Verfahren gemäß einem der vorhergehenden Ansprüche, **dadurch gekennzeichnet, dass** die Flüssigphase (12) nach der Elektrolyse in weiteren Elektrolysezellen unter Verwendung anderer Elektroden als Elektrolytlösung eingesetzt wird.

13. Verfahren gemäß Anspruch 12, **dadurch gekennzeichnet, dass** die Elektrolysezellen kaskadenartig mit getrennten Zellen gebildet sind, eine gemeinsame, verbundene Zelle mit unterschiedlichen pH-Bereichen bilden oder als gemeinsame Zelle unter Zwischenlage von Membranen zwischen den Zellbereichen gebildet sind.
